# EUROPEAN PATENT SPECIFICATION

(11) **EP 4 491 310 B1**
(45) Date of publication and mention of the grant of the patent: **04.03.2026**
(21) Application number: 23185419.1
(22) Date of filing: 13.07.2023
(51) Int. Cl.: B23C 5/06

(54) **FACE MILLING CUTTER**
PLANFRÄSER
FRAISE À SURFACER

(43) Date of publication of application: 15.01.2025
(73) Proprietor: Seco Tools AB, 737 82 Fagersta (SE)
(72) Inventor: JANSSON, Per Rickard, 737 31 Fagersta (SE)
(74) Representative: Sandvik

(56) References cited:
- EP-A1- 2 127 793
- EP-B1- 2 755 787
- US-A1- 2003 113 176
- US-A1- 2007 160 431

## Description

### FIELD OF THE INVENTION AND PRIOR ART

The present invention relates to a face milling cutter according to the preamble of claim 1.

A face milling cutter is a rotating cutting tool used for performing face milling operations on a workpiece. In a face milling operation, a flat surface is cut perpendicular to the longitudinal centre axis of the tool body of the face milling cutter. A face milling cutter may be provided with several cutting inserts detachably mounted in a respective insert seat in the tool body of the face milling cutter. Each individual cutting insert may be provided with several identical cutting edges, to thereby allow each cutting insert to be turned into different working positions. When a cutting edge of a cutting insert has been worn out, the cutting insert may be repositioned in its insert seat and mounted in a new working position with another cutting edge in an active cutting position.

A face milling cutter of the above-mentioned type may be used for performing so-called roughing, i.e. chip removing with a rather large depth of cut. A face milling cutter of the above-mentioned type may also be used for performing so-called finishing, i.e. shallow surface smoothing of a surface on a workpiece, by means of a surface-wiping cutting edge of each cutting insert, wherein each cutting insert has to be mounted to the tool body of the face milling cutter in such a position that its active surface-wiping cutting edge is located a short distance axially forwardly of an axially foremost point or surface of the tool body.

EP 2 755 787 B1 discloses a face milling cutter with a tool body of the type defined in the preamble of claim 1. According to one of the variants shown in EP 2 755 787 B1, a cutting insert with eight major cutting edges is mounted in each one of the insert seats of the tool body in any of its eight different working positions with a bottom face of the cutting insert abutting against a bottom surface of the associated insert seat and with three inclined abutment surfaces on a peripheral surface of the cutting insert abutting against a respective inclined support surface on an internal wall of the associated insert seat, wherein said bottom surface of the insert seat is acting as a tangential support surface for the cutting insert.

### OBJECT OF THE INVENTION

The object of the present invention is to provide a face milling cutter of the above-mentioned type that has a new and favourable design.

### SUMMARY OF THE INVENTION

According to the invention, said object is achieved by means of a face milling cutter having the features defined in claim 1.

The face milling cutter according to the invention comprises:
- a tool body having a front end and an opposite rear end, the rear end being configured for attachment to a machine, wherein a longitudinal centre axis of the tool body extends between the rear end and the front end of the tool body;
- at least two insert seats provided in the tool body and distributed in the circumferential direction of the tool body, wherein each one of these at least two insert seats comprises a substantially tangentially facing bottom surface, a threaded screw hole provided in the bottom surface and having a centre axis, a substantially tangentially facing top opening opposite to the bottom surface and an internal wall provided between the bottom surface and the top opening and partly surrounding a reference axis that coincides with the centre axis of said screw hole, the insert seat being open towards the front end of the tool body through a gap provided between the bottom surface and the top opening in order to allow a cutting insert mounted in the insert seat to project in the axial direction of the tool body beyond a first reference plane that extends perpendicularly to the centre axis of the tool body and contains an axially foremost point or axially foremost surface of the tool body, wherein said internal wall is provided with a substantially flat first support surface, a substantially flat second support surface and a substantially flat third support surface, the first, second and third support surfaces being angularly offset from each other with respect to said reference axis and being inclined at the same angle in relation to a second reference plane that is perpendicular to said reference axis such that they diverge from each other as seen along said reference axis in a direction through the associated insert seat away from the bottom surface thereof, and wherein the second support surface is separated from the first support surface of the same insert seat by said gap and located at a longer distance from the centre axis of the tool body than the first and third support surfaces of the same insert seat and the first support surface is located closer to said first reference plane than the third support surface of the same insert seat;

- at least two cutting inserts, each of which being detachably mountable in n different working positions in a respective insert seat of said at least two insert seats, where n is an integer having the value of 2, 4, 5, 6, 7 or 8, wherein each cutting insert of said at least two cutting inserts comprises:
   - a first major face and a second major face arranged on opposite sides of the cutting insert, the cutting insert having a centre axis that extends between the first and second major faces, wherein the first major face is configured to face away from the bottom surface of the associated insert seat and serve as a rake face and the second major face is configured to face this bottom surface when the cutting insert is mounted in the insert seat in any of its n working positions,
   - a through hole extending centrally through the cutting insert between the first and second major faces,
   - a peripheral surface extending around the cutting insert between the first and second major faces, wherein the cutting insert, when mounted in the associated insert seat in any of its n working positions, is configured to abut against the first, second and third support surfaces in the insert seat via substantially flat abutment surfaces provided on the peripheral surface and distributed about the centre axis of the cutting insert, and
   - n major cutting edges formed at an intersection between the peripheral surface and the first major face, each major cutting edge having two opposite ends and adjoining, at each one of these two opposite ends, to a minor corner cutting edge formed at an intersection between the peripheral surface and the first major face, wherein these major cutting edges are configured to serve as surface-wiping cutting edges in a respective one of said n working positions of the cutting insert; and
- at least two fastening elements in the form of screws associated with a respective one of said at least two cutting inserts and by means of which said at least two cutting inserts may be releasably fixed to the associated insert seats in any of their n working positions, wherein each one of these at least two fastening elements is configured to extend through the through hole in the associated cutting insert of said at least two cutting inserts and to be in threaded engagement with the screw hole at the bottom surface of the insert seat associated with this cutting insert.

The above-mentioned first, second and third support surfaces of each insert seat are so arranged in relation to each other in the tool body that in any plane that is perpendicular to said reference axis of the insert seat and intersects the first, second and third support surfaces of the insert seat:
- the first support surface extends along a first line that is parallel to a second line, along which the second support surface extends in the same plane, or is inclined in relation to this second line such that the first and second lines converge towards a first point of intersection located in front of said first reference plane as seen in a reference direction from the rear end of the tool body towards the front end of the tool body in parallel with the centre axis of the tool body, and
- the third support surface extends along a third line that is inclined in relation to said first and second lines such that the third and first lines converge towards a second point of intersection located behind said first reference plane as seen in said reference direction and such that the third and second lines converge towards a third point of intersection located behind said first reference plane as seen in said reference direction.

Thus, as seen in each plane that is perpendicular to the reference axis of the insert seat and intersects the first, second and third support surfaces of the insert seat, the first and second support surfaces are parallel to each other or converge towards a point of intersection located in front of the first reference plane as seen in the reference direction, the third and first support surfaces converge towards a point of intersection located behind the first reference plane as seen in the reference direction, and the third and second support surfaces converge towards another point of intersection located behind the first reference plane as seen in the reference direction.

Furthermore, each cutting insert and the associated insert seat are so adapted to each other that the second major face of the cutting insert is located at a distance from the bottom surface of the insert seat when the cutting insert is mounted to the insert seat in any of its n working positions. Thus, the cutting insert is not in contact with the bottom surface of the associated insert seat in any of its working positions.

The three inclined support surfaces of the insert seat will act as a guide cone and guide the cutting insert to be correctly centered in the insert seat when the cutting insert is moved downwards into the insert seat during a tightening of the associated fastening element. Hereby, the requirements with respect to the manufacturing tolerances of the insert seats and the cutting inserts are reduced. This centering of the cutting inserts and the variable position for the second major face, i.e. the bottom face, of each cutting insert in the associated insert seat, as a consequence of the mounting of the cutting insert in the insert seat with its second major face out of contact with the bottom surface of the insert seat, imply that the axial run-out error of the face milling cutter caused by manufacturing tolerances of the cutting inserts will be reduced as compared to a corresponding face milling cutter where each cutting insert is mounted to the associated insert seat with its bottom face abutting against a bottom surface of the insert seat.

The above-specified positions and orientations of the three support surfaces of each one of the insert seats also imply that the cutting insert received in the insert seat may be stably and accurately supported in the insert seat without requiring any support by a tangential bottom surface in the insert seat. The cutting insert will hereby, without any support by a tangential bottom surface in the insert seat, be able to take up the cutting forces during a face milling operation without being dislodged in relation to the insert seat, at least when the face milling cutter is used for finishing a surface on a workpiece or used for roughing with a limited cutting depth.

The insert seats and the cutting inserts may be so adapted to each other that each cutting insert is mounted to the associated insert seat with an axial tipping-in angle in an interval from -15° to 25°, i.e. with a negative, neutral or positive axial tipping-in angle, and with a radial tipping-in angle in an interval from -30° to 10°, i.e. with a negative, neutral or positive radial tipping-in angle. The radial tipping-in angle is preferably negative. The bottom surface of each insert seat may be arranged in a completely tangential position in the tool body, i.e. with a surface normal that extends in a tangential direction of the tool body. However, the bottom surface of each insert seat may as an alternative be slightly inclined, for instance in correspondence with an axial and/or radial tipping-in angle of the cutting inserts.

Each one of the major cutting edges of each cutting insert, i.e. each one of the cutting edges that serve as a surface-wiping cutting edge of the cutting insert in a respective one of the n working positions of the cutting insert, is with advantage straight or alternatively slightly convex as seen in a plan view along the centre axis of the cutting insert.

Said cutting inserts and said insert seats are preferably so adapted to each other that the major cutting edge of each cutting insert that serves as surface-wiping cutting edge of the cutting insert when the cutting insert is mounted to the associated insert seat in any of its n working positions extends perpendicularly, or at least substantially perpendicularly, to the centre axis of the tool body. Thus, in this case, each major cutting edge is configured to extend perpendicularly, or at least substantially perpendicularly, to the centre axis of the tool body when the major cutting edge is in an active cutting position. When the major cutting edges are slightly convex as seen in said plan view, the direction of extension of each individual major cutting edge is in this context defined by the direction of extension of a straight line that intersects a first end point of the major cutting edge at a first end thereof and a second end point of the major cutting edge at an opposite second end thereof.

In dependence on the number of different working positions of each cutting insert, i.e. the value of n, and the selected positions for the first, second and third support surfaces of each insert seat, said third line extends at an angle of 25.7-135° in relation to said first line and at an angle of 25.7-135° in relation to said second line.

n preferably has the value of 4, 5, 6, 7 or 8, wherein said abutment surfaces on the peripheral surface of each one of said at least two cutting inserts are n in number. Thus, in this case the number of abutment surfaces on the peripheral surface of each cutting insert corresponds to the number of different working positions of the cutting insert. When each cutting insert has a substantially rectangular basic shape with two different working positions, i.e. when n has the value of 2, there has to be four abutment surfaces on the peripheral surface of each cutting insert.

According to an embodiment of the invention, the first major face of each cutting insert has a substantially regular polygon shape as seen in a plan view along the centre axis of the cutting insert, with n main sides and with chamfered or rounded corners between the main sides, wherein the major cutting edges of the cutting insert extend along a respective one of said n main sides. In this case, the peripheral surface of the cutting insert preferably has a corresponding regular polygon shape as seen in any cross-section of the cutting insert that is perpendicular to the centre axis of the cutting insert and intersects the abutment surfaces on the peripheral surface.

According to another embodiment of the invention, said abutment surfaces on the peripheral surface of each cutting insert are inclined at an angle of α±0.5° in relation to a third reference plane that is perpendicular to the centre axis of the cutting insert such that they diverge from each other as seen along this centre axis in a direction from the second major face of the cutting insert to the first major face thereof, where α is the angle of inclination of the first, second and third support surfaces of each one of said at least two insert seats in relation to said second reference plane. Thus, the inclination of the abutment surfaces on the cutting inserts may differ slightly from the inclination on the corresponding support surfaces of the insert seats. However, the inclination of the abutment surfaces on the cutting inserts is preferably the same, within manufacturing tolerances, as the inclination of the corresponding support surfaces on the insert seats.

According to another embodiment of the invention, each cutting insert has 360°/n rotational symmetry about the centre axis of the cutting insert. In this context, the cutting insert is considered to have 360°/n rotational symmetry about the centre axis even if any of the first and second major faces or the peripheral surface is provided with one or more minor markings, for instance in the form of recesses, that lack 360°/n rotational symmetry image about the centre axis, on condition that these one or more markings have no relevance for the functioning of the cutting insert.

According to another embodiment of the invention, the perpendicular distance between said first reference plane and an axially foremost point of any cutting insert of said at least two cutting inserts is 0.5-1.5 mm when the cutting insert is mounted to the associated insert seat in any of its n working positions. Said axially foremost point of the cutting insert is located on the major cutting edge of the cutting insert that is presently in an active cutting position, i.e. the major cutting edge that is presently serving as an active surface-wiping cutting edge of the cutting insert.

According to another embodiment of the invention, the face milling cutter comprises at least two wedge mechanisms, each of which being mountable in a respective insert seat of said at least two insert seats in order to form an adjustable support for the second major face of the cutting insert mounted therein, wherein each one of these at least two wedge mechanisms comprises:
- a wedge member having a first wedge surface configured to slidably abut against the bottom surface of the associated insert seat and an opposite second wedge surface configured to abut against the second major face of the associated cutting insert; and
- an actuating member, by means of which the wedge member is moveable along the bottom surface of the associated insert seat in order to move the second wedge surface of the wedge member into supporting contact with the second major face of the associated cutting insert when the cutting insert has been mounted to the insert seat in any of its n working positions.

When properly positioned in the associated insert seat, the wedge member of each wedge mechanism will provide a support for the second major face of the cutting insert mounted in the insert seat, i.e. a tangential support for the cutting insert in the insert seat in addition to the support provided by the first, second and third support surfaces of the insert seat when the cutting insert has been properly mounted to the insert seat in any of its n working positions. This additional support for the cutting inserts makes it possible for each cutting insert to take up larger cutting forces during a face milling operation without being dislodged in relation to the associated insert seat. Wedge mechanisms of the type here in question are therefore suitable for use when the face milling cutter is to be used for roughing.

The above-mentioned actuating member of each wedge mechanism preferably has the form of an adjustment screw. In this case, the actuating member is with advantage provided with an external first thread configured for threaded engagement with a screw hole in the associated insert seat and an external second thread configured for threaded engagement with a screw hole in the wedge member. Said first and second threads may have different thread pitches and/or may be threaded in opposite directions. By rotation of the adjustment screw in a first direction of rotation, the wedge member is made to move in a first direction along the bottom surface of the associated insert seat in order to move the second wedge surface of the wedge member into contact with the second major face of a cutting insert that has been mounted to the insert seat in any of its n working positions. By rotation of the adjustment screw in an opposite second direction of rotation, the wedge member is made to move in an opposite second direction along the bottom surface of the associated insert seat in order to provide free space between the wedge member and the second major face of the cutting insert when a repositioning of the cutting insert in the insert seat is to take place, i.e. when the cutting insert is to be mounted to the insert seat in a new working position.

Further advantageous features of the face milling cutter according to the present invention will appear from the description following below.

### BRIEF DESCRIPTION OF THE DRAWINGS

With reference to the appended drawings, a specific description of embodiments of the invention cited as examples follows below. In the drawings:
- Fig 1a: is a partly exploded perspective view of a face milling cutter according to a first embodiment of the present invention,
- Fig 1b: is a plan view from below of the face milling cutter of Fig 1a,
- Fig 1c: is a lateral view of the face milling cutter of Fig 1a,
- Fig 2a: is a perspective view of a part of the face milling cutter of Fig 1a,
- Fig 2b: is an exploded perspective view of the part shown in Fig 2a,
- Fig 2c: is a perspective view from another direction of the part shown in Fig 2a,
- Fig 3: is a perspective view of another part of the face milling cutter of Fig 1a,
- Fig 4a: is a cut according to the line IVa-IVa in Fig 2c,
- Fig 4b: is a cut according to the line IVb-IVb in Fig 2c,
- Fig 5: is a cut according to the line V-V in Fig 4a,
- Figs 6a and 6b: are perspective views from different directions of a cutting insert included in the face milling cutter of Fig 1a,
- Fig 6c: is a plan view from above of the cutting insert of Figs 6a and 6b,
- Fig 6d: is a plan view from below of the cutting insert of Figs 6a and 6b,
- Fig 6e: is a cut according to the line Vle-Vle in Fig 6c,
- Fig 6f: is a lateral view of the cutting insert of Figs 6a and 6b,
- Fig 7: is a very schematic illustration of a cutting insert with a substantially rectangular basic shape mounted to an insert seat of a face milling cutter according to the invention,
- Figs 8a and 8b: are very schematic illustrations of a cutting insert with a substantially pentagon basic shape mounted to an insert seat of different face milling cutters according to the invention,
- Figs 9a and 9b: are very schematic illustrations of a cutting insert with a substantially hexagon basic shape mounted to an insert seat of different face milling cutters according to the invention,
- Figs 10a and 10b: are very schematic illustrations of a cutting insert with a substantially heptagon basic shape mounted to an insert seat of different face milling cutters according to the invention,
- Figs 11a-11c: are very schematic illustrations of a cutting insert with a substantially octagon basic shape mounted to an insert seat of different face milling cutters according to the invention,
- Fig 12a: is a partly exploded perspective view of a face milling cutter according to a second embodiment of the invention,
- Fig 12b: is a plan view from below of the face milling cutter of Fig 12a,
- Fig 13a: is a perspective view of a part of the face milling cutter of Fig 12a,
- Fig 13b: is an exploded perspective view of the part shown in Fig 13a,
- Fig 13c: is a perspective view from another direction of the part shown in Fig 13a,
- Fig 14: is a perspective view of another part of the face milling cutter of Fig 12a,
- Fig 15a: is a cut according to the line XVa-XVa in Fig 13c,
- Fig 15b: is a cut according to the line XVb-XVb in Fig 13c, and
- Figs 16a and 16b: are perspective views from different directions of a wedge member included in the face milling cutter of Fig 12a.

### DETAILED DESCRIPTION OF EMBODIMENTS OF THE INVENTION

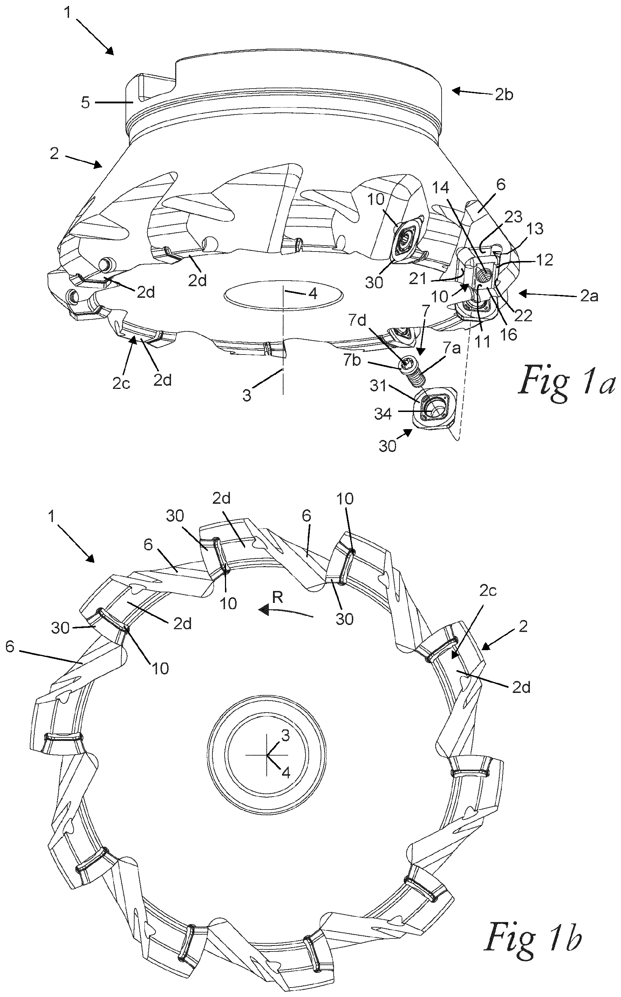

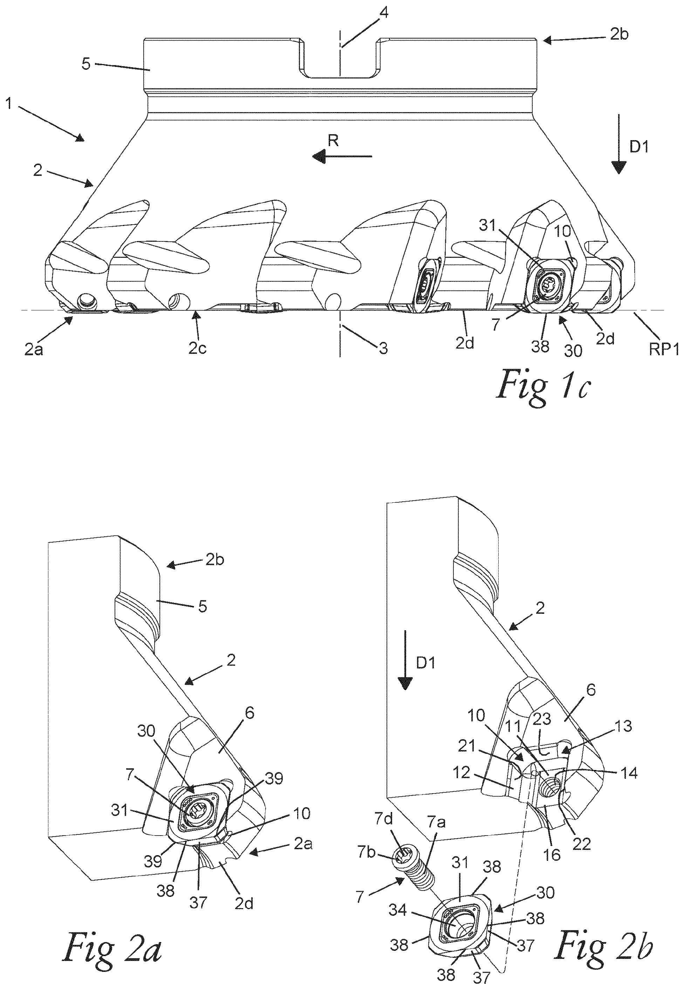

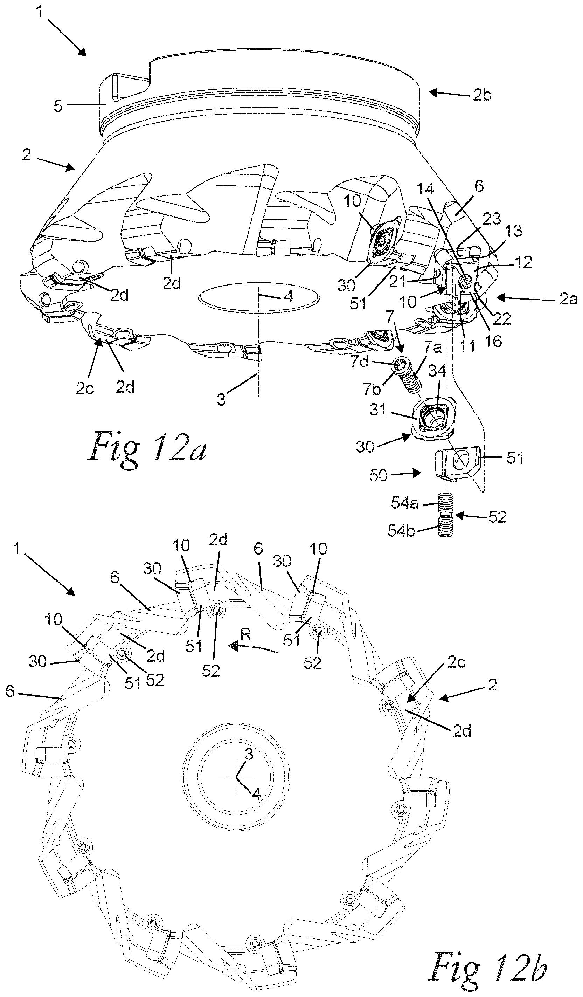

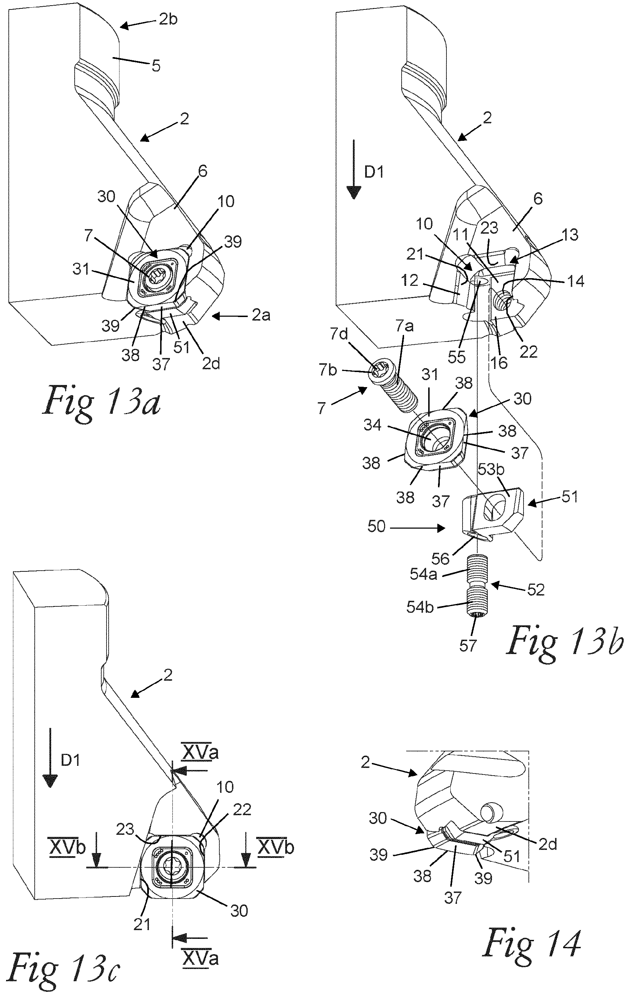

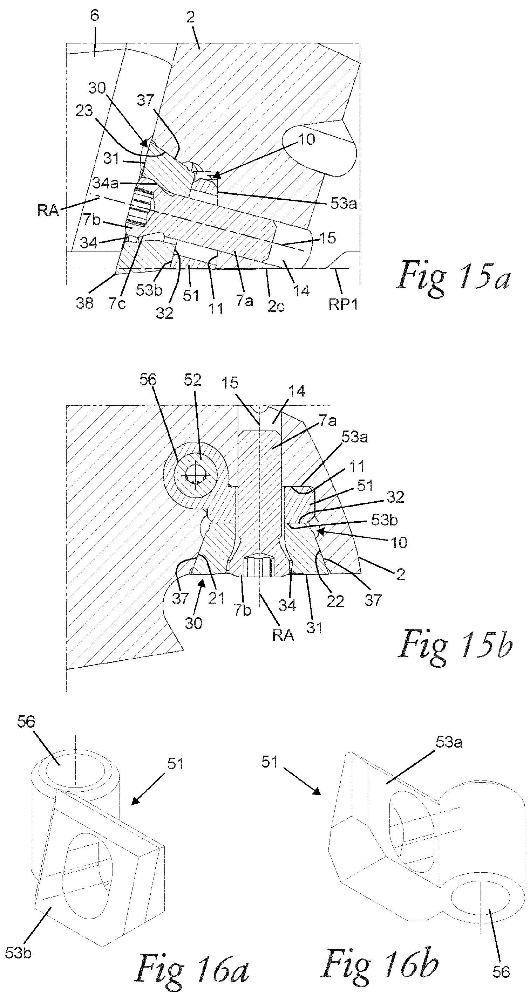

Two different embodiments of a face milling cutter 1 according to the present invention are illustrated in Figs 1-5 and in Figs 12-15, respectively. The face milling cutter 1 comprises a tool body 2 and is configured to be rotated about an axis of rotation 3. The tool body 2 has a front end 2a and an opposite rear end 2b. A longitudinal centre axis 4 of the tool body 2 extends between the rear end 2b and the front end 2a of the tool body, wherein this centre axis 4 coincides with the axis of rotation 3 of the face milling cutter 1. A rear part of the tool body 2 forms a connection member 5, through which the tool body 2 is mountable, directly or via an intermediate tool holder, to a rotating spindle or the similar of a machine, for instance a milling machine. A front part of the tool body 2 is provided with several insert seats 10, which are evenly or at least substantially evenly distributed in the circumferential direction of the tool body 2 and configured to receive a respective cutting insert 30. Thus, the insert seats 10 and also the cutting inserts 30, are evenly or at least substantially evenly distributed about the centre axis 4 of the tool body 2. A chip pocket 6 is provided in the tool body 2 in front of each insert seat 10 as seen in the intended direction of rotation R of the tool body 2.

In the illustrated embodiments, the tool body 2 is provided with ten insert seats 10 spaced apart in the circumferential direction of the tool body. However, the tool body 2 may as an alternative, inter alia depending on the diameter of the tool body, be provided with any other suitable number of insert seats 10, as long as they are at least two in number. Each cutting insert 30 is configured to be detachably mounted in its associated insert seat 10.

Each insert seat 10 comprises a substantially tangentially facing bottom surface 11, a substantially tangentially facing top opening 12 opposite to the bottom surface 11 and an internal wall 13 provided between the bottom surface 11 and the top opening 12. The top opening 12 is facing the chip pocket 6 provided in front of the insert seat 10. A threaded screw hole 14 is provided in the bottom surface 11, wherein this screw hole 14 has a centre axis 15. The internal wall 13 of the insert seat 10 partly surrounds a reference axis RA of the insert seat that coincides with the centre axis 15 of said screw hole 14. The insert seat 10 is open towards the front end 2a of the tool body 2 through a gap 16 provided between the bottom surface 11 and the top opening 12 in order to allow a cutting insert 30 mounted in the insert seat to project in the axial direction of the tool body 2 beyond an imaginary first reference plane RP1 that extends perpendicularly to the centre axis 4 of the tool body 2 and contains an axially foremost point or axially foremost surface 2c of the tool body 2. The axially foremost point or surface of the tool body refers to the point/surface of the tool body 2 that is most distant from the rear end 2b of the tool body as seen in a reference direction D1 from the rear end 2b of the tool body towards the front end 2a of the tool body in parallel with the centre axis 4 of the tool body. In the illustrated embodiments, the tool body 2 has an axially foremost surface 2c formed by several sub-surfaces 2d, each of which being located on a front face of the tool body between two adjacent chip pockets 6. The gap 16 forms a forwardly facing opening in the internal wall 13 of the insert seat 10, wherein the internal wall 13 extends around the reference axis RA from a first side of the gap 16 to an opposite second side of the gap 16.

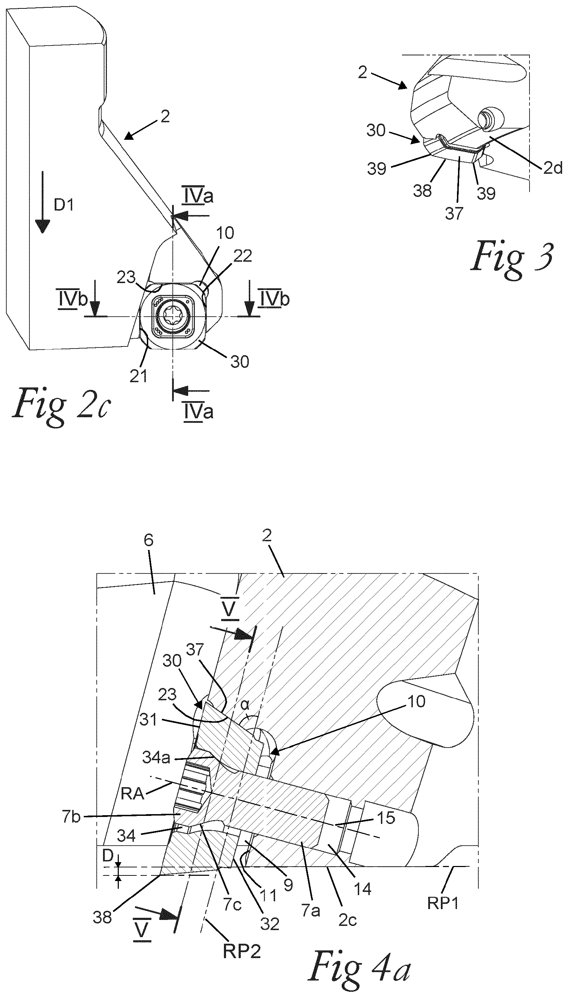

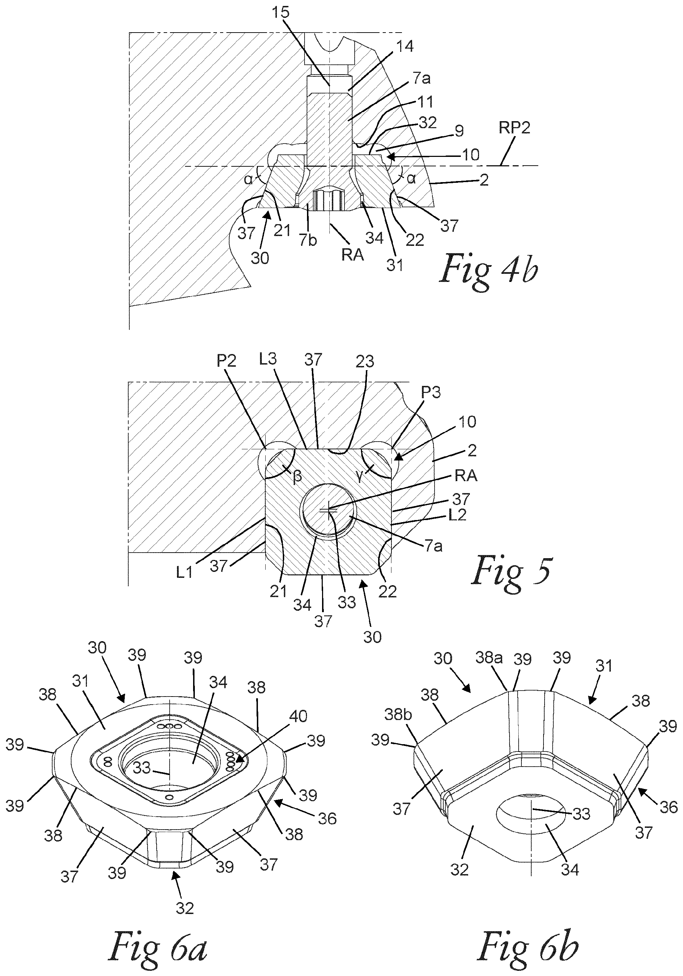

The internal wall 13 of each insert seat 10 is provided with a substantially flat first support surface 21, a substantially flat second support surface 22 and a substantially flat third support surface 23, wherein the first, second and third support surfaces 21-23 are angularly offset from each other with respect to the reference axis RA of the insert seat 10 and are inclined at the same angle a (see Figs 4a and 4b) in relation to an imaginary second reference plane RP2 that is perpendicular to said reference axis RA such that they diverge from each other as seen along the reference axis RA in a direction through the associated insert seat 10 away from the bottom surface 11 thereof. The second support surface 22 is separated from the first support surface 21 of the same insert seat 10 by the above-mentioned gap 16 of the insert seat and is located at a longer distance from the centre axis 4 of the tool body 2 than the first and third support surfaces 21, 23 of the same insert seat. Thus, the first and second support surfaces 21, 22 are located on either sides of the gap 16. The first support surface 21 is located closer to the first reference plane RP1 than the third support surface 23 of the same insert seat 10, i.e. axially forwardly of the third support surface 23 of the same insert seat 10 as seen in the reference direction D1. When viewing the insert seat 10 in a plan view along the reference axis RA associated with the insert seat, the gap 16 is followed by the first support surface 21, which in its turn is followed by the third support surface 23, which in its turn is followed by the second support surface 22, as seen in a clockwise direction about the reference axis RA.

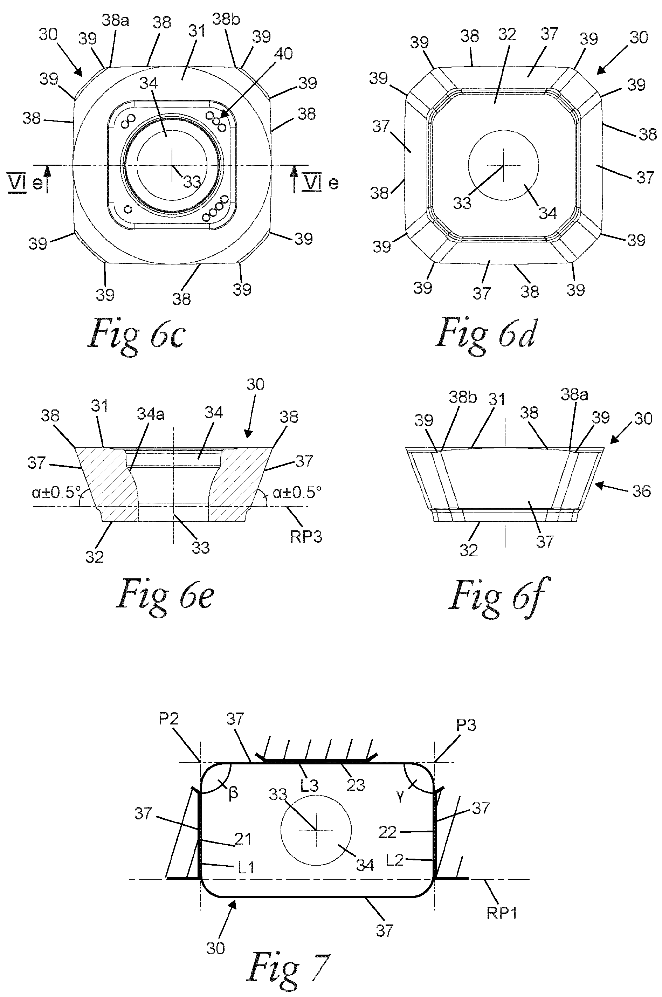

The cutting inserts 30 are all geometrically identical to each other, within manufacturing tolerances. Thus, the cutting inserts 30 have the same shape. The cutting inserts 30 illustrated in Figs 1-5 and in Figs 12-15 are of the type illustrated in closer detail in Figs 6a-6f but may also be designed in any other suitable manner.

The insert seats 10 are arranged in level with each other as seen in the axial direction of the tool body 2, such that the axially foremost point of each individual cutting insert 30, as seen in the reference direction D1, is located in level with the axially foremost point of each one of the other cutting inserts 30, within manufacturing tolerances, when the cutting inserts 30 are mounted in the insert seats 10.

Each cutting insert 30 is detachably mountable in n different working positions in the associated insert seat 10, where n is an integer having the value of 2, 4, 5, 6, 7 or 8. Each cutting insert 30 comprises a first major face 31 and a second major face 32 arranged on opposite sides of the cutting insert and serving as top and bottom faces of the cutting insert. The cutting insert 30 has a centre axis 33 that extends between the first and second major faces 31, 32. The first major face 31 is configured to face away from the bottom surface 11 of the associated insert seat 10 and serve as a rake face and the second major face 32 is configured to face this bottom surface 11 when the cutting insert 30 is mounted in the insert seat 10 in any of its n working positions. A through hole 34 extends centrally through the cutting insert 30 between the first and second major faces 31, 32. The centre axis 33 of the cutting insert coincides with the centre axis of the through hole 34. A peripheral surface 36 extends around the cutting insert 30 between the first and second major faces 31 and is provided with several flat, or at least substantially flat, abutment surfaces 37 distributed about the centre axis 33 of the cutting insert. When the cutting insert 30 is mounted in the associated insert seat 10 in any of its n working positions, the cutting insert 30 is configured to abut against the first, second and third support surfaces 21-23 in the insert seat 10 via three of said abutment surfaces 37 on the peripheral surface 36 of the cutting insert. Several major cutting edges 38 and several corner cutting edge 39 are formed at an intersection between the peripheral surface 36 and the first major face 31. The major cutting edges 38 correspond in number to the number of working positions of the cutting insert 30. Each major cutting edge 38 has two opposite ends 38a, 38b and adjoins, at each one of these ends 38a, 38b, to a minor corner cutting edge 39. Thus, each major cutting edge 38 is flanked by two minor corner cutting edges 39. The major cutting edges 38 are configured to serve as surface-wiping cutting edges in a respective one of the working positions of the cutting insert 30.

Each one of said major cutting edges 38 is preferably straight or convex as seen in a plan view along the centre axis 33 of the cutting insert 30. Furthermore, the cutting inserts 30 and the insert seats 10 are preferably so adapted to each other that the major cutting edge 38 of each cutting insert 30 that is in an active cutting position and serves as surface-wiping cutting edge of the cutting insert 30 when the cutting insert is mounted to the associated insert seat 10 in any of its working positions extends perpendicularly, or at least substantially perpendicularly, to the centre axis 4 of the tool body 2.

The perpendicular distance D (see Fig 4a) between the first reference plane RP1 and an axially foremost point of each cutting insert 30 is preferably 0.5-1.5 mm when the cutting insert 30 is mounted to the associated insert seat 10 in any of its working positions.

Fastening elements 7 in the form of screws are associated with a respective one of the cutting inserts 30, wherein the cutting inserts 30 may be releasably fixed to the associated insert seats 10 in any of their working positions by means of these fastening elements 7. Each fastening element 7 is configured to extend through the through hole 34 in the associated cutting insert 30 and to be in threaded engagement with the screw hole 14 at the bottom surface 11 of the insert seat 10 associated with this cutting insert 30. Each fastening element 7 comprises an elongated shaft 7a, which is provided with an external thread configured for engagement with a corresponding internal thread in any of said screw holes 14, and a head 7b, which is fixed to the shaft 7a. The shaft 7a has an external diameter that is smaller than the internal diameter of the through holes 34 in the cutting inserts 30 such that the shaft 7a is receivable with play in the through hole 34 of the associated cutting insert, as illustrated in Figs 4a, 4b and 5. Each through hole 34 is provided with a conically shaped internal surface 34a configured for engagement with a corresponding conically shaped external surface 7c on the head 7b of the associated fastening element. In the illustrated embodiments, the screw hole 14 at the bottom surface 11 of each insert seat 10 is located somewhat closer to the third support surface 23 of the insert seat than to the first and second support surfaces 21, 22 of the insert seat. When a fastening element 7 is threaded into the screw hole 14 in the associated insert seat 10 with the shaft 7a of the fastening element 7 received in the through hole 34 in the cutting insert 30 positioned in the insert seat in question, the conically shaped external surface 7c on the head 7b will come into engagement with the conically shaped internal surface 34a in the through hole 34 and thereby push the cutting insert 30 laterally against the third support surface 23 in the insert seat. The head 7b of each fastening element 7 is provided with a socket 7d designed for detachable engagement with a torque tool (not shown) to be used for rotating the fastening element 7.

The first, second and third support surfaces 21-23 of each insert seat 10 are so arranged in relation to each other in the tool body 2 that in any plane that is perpendicular to the reference axis RA of the insert seat 10 and intersects the first, second and third support surfaces 21-23 of the insert seat:
- the first support surface 21 extends along a first line L1 that is parallel to a second line L2, along which the second support surface 22 extends in the same plane, or is inclined in relation to this second line L2 such that the first and second lines L1, L2 converge towards a first point of intersection P1 located in front of the first reference plane RP1 as seen in the reference direction D1, and
- the third support surface 23 extends along a third line L3 that is inclined in relation to said first and second lines L1, L2 such that the third and first lines L3, L1 converge towards a second point of intersection P2 located behind the first reference plane RP1 as seen in the reference direction D1 and such that the third and second lines L3, L2 converge towards a third point of intersection P3 located behind the first reference plane RP1 as seen in the reference direction D1.

Furthermore, the cutting inserts 30 and the insert seats 10 are so adapted to each other that the second major face 32 of each cutting insert 30 is located at a distance from the bottom surface 11 of the associated insert seat 10 when the cutting insert 30 is mounted to the insert seat 10 in any of its working positions, as illustrated in Figs 4a and 4b. Thus, when a cutting insert 30 is mounted to the associated insert seat 10 in any of its working positions, there is an interspace 9 between the second major face 32 of the cutting insert 30 and the bottom surface 11 of the insert seat 10. If so desired, a wedge member 51 of a wedge mechanism 50 may be fitted into this interspace 9, as will be described in closer detail further below with reference to Figs 12-15.

The first, second and third support surfaces 21-23 of each insert seat 10 will act as a guide cone and guide the associated cutting insert 30 into a correct position in the insert seat 10 when the cutting insert is moved downwards into the insert seat during a tightening of the associated fastening element 7.

The abutment surfaces 37 on the peripheral surface 36 of each cutting insert 30 are preferably inclined at an angle of α±0.5° in relation to a third reference plane RP3 (see fig 6e) that is perpendicular to the centre axis 33 of the cutting insert 30 such that the abutment surfaces 37 diverge from each other as seen along this centre axis 33 in a direction from the second major face 32 of the cutting insert to the first major face 31 thereof, where a is the angle of inclination of the first, second and third support surfaces 21-23 of each insert seat 10 in relation to the second reference plane RP2. When the cutting insert 30 is mounted to the associated insert seat 10 in any of its working positions, said third reference plane RP3 of the cutting insert 30 is parallel, or at least substantially parallel, to said second reference plane RP2 of the insert seat 10.

To make possible a positioning of each cutting insert 30 in more than one working position in the associated insert seat 10, there has to be at least four abutment surfaces 37 on the peripheral surface 36 of each cutting insert. Thus, when the above-mentioned integer n has the value of 2, each cutting insert 30 has four abutment surfaces 37 on its peripheral surface 36. However, when the integer n has the value of 4, 5, 6, 7 or 8, said abutment surfaces 37 on the peripheral surface 36 of each cutting insert 30 are also n in number. Thus, in these cases, the number of abutment surfaces 37 corresponds to the number of working positions.

Each cutting insert 30 preferably has a substantially regular polygon shape as seen in a plan view along the centre axis 33 of the cutting insert, with n main sides and with chamfered or rounded corners between the main sides, wherein the major cutting edges 38 of the cutting insert 30 extend along a respective one of said n main sides.

Each major cutting edge 38 is preferably formed at an intersection between one of the abutment surfaces 37 of the cutting insert 30 and the first major face 31 of the cutting insert, as illustrated in Figs 6a-6f. When the cutting insert 30 is mounted to the associated insert seat 10 in any of its working positions, one of the abutment surfaces 37 of the cutting insert is received in the above-mentioned gap 16 of the insert seat and configured to serve as a relief surface for the active major cutting edge 38.

In the embodiments illustrated in Figs 1-5 and Figs 12-15, each cutting insert 30 has a substantially square shape as seen in a plan view along the centre axis 33 of the cutting insert, wherein the above-mentioned integer n has the value of 4. Thus, in this case, each cutting insert 30 is mountable to the associated insert seat 10 in four different working positions and is provided with four major cutting edges 38 and four abutment surfaces 37. In this case, the first and second support surfaces 21, 22 of the same insert seat 10 are parallel to each other and perpendicular to the third support surface 23 of the same insert seat, as seen in any plane that is perpendicular to the reference axis RA of the insert seat 10 and intersects the first, second and third support surfaces 21-23 of the insert seat, wherein said first and second lines L1, L2 are parallel to each other, and said third line L3 extends at an angle β of 90° in relation to said first line L1 and at an angle γ of 90° in relation to said second line L2. In the illustrated embodiments, each major cutting edge 38 is formed at an intersection between one of the abutment surfaces 37 of the cutting insert 30 and the first major face 31 of the cutting insert. When the cutting insert 30 is mounted to the associated insert seat 10 in any of its working positions, one of the abutment surfaces 37 of the cutting insert is received in the above-mentioned gap 16 of the insert seat and configured to serve as a relief surface for the active major cutting edge 38.

Each cutting insert 30 preferably has 360°/n rotational symmetry about the centre axis 33 of the cutting insert. In the illustrated embodiments, the first major face 31 of each cutting insert 30 is provided with markings 40 in the form of recesses in order to facilitate an identification of the different working positions of the cutting insert 30. Except for the markings 40, the illustrated cutting insert 30 has 90° rotational symmetry about its centre axis 33.

In the embodiments illustrated in Figs 1-5 and 12-15, each cutting insert 30 is mounted to the associated insert seat 10 with a positive axial tipping-in angle.

Fig 7 schematically illustrates how a cutting insert 30 is supported by the three support surfaces 21-23 in an insert seat of a tool body of a face milling tool according to the invention when each cutting insert 30 has a substantially rectangular shape as seen in a plan view along the centre axis 33 of the cutting insert and in a cross-section perpendicular to the centre axis 33 of the cutting insert, wherein the above-mentioned integer n has the value of 2. In this case, each cutting insert 30 is mountable to the associated insert seat in two different working positions and is provided with two major cutting edges and four abutment surfaces 37. In this case, the first and second support surfaces 21, 22 of the same insert seat are parallel to each other and perpendicular to the third support surface 23 of the same insert seat, as seen in any plane that is perpendicular to the reference axis RA of the insert seat and intersects the first, second and third support surfaces 21-23 of the insert seat, wherein said first and second lines L1, L2 are parallel to each other, and said third line L3 extends at an angle β of 90° in relation to said first line L1 and at an angle γ of 90° in relation to said second line L2.

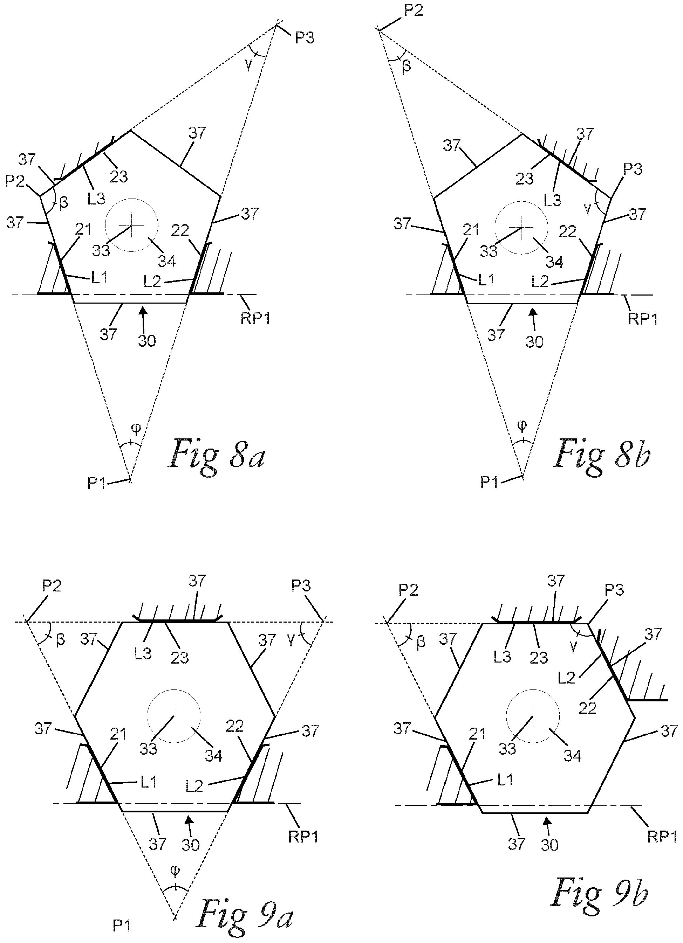

Figs 8a and 8b schematically illustrate the two possible variants for the supporting of a cutting insert 30 by the three support surfaces 21-23 in an insert seat of a tool body of a face milling tool according to the invention when each cutting insert 30 has a substantially pentagon shape as seen in a plan view along the centre axis 33 of the cutting insert and in a cross-section perpendicular to the centre axis 33 of the cutting insert, wherein the above-mentioned integer n has the value of 5. In this case, each cutting insert 30 is mountable to the associated insert seat in five different working positions and is provided with five major cutting edges and five abutment surfaces 37. In both variants, the first and second support surfaces 21, 22 of the same insert seat are inclined in relation to each other and also inclined in relation to the third support surface 23 of the same insert seat, as seen in any plane that is perpendicular to the reference axis RA of the insert seat and intersects the first, second and third support surfaces 21-23 of the insert seat, wherein said first line L1 extends at an angle φ of 36° in relation to said second line L2. In the variant illustrated in Fig 8a, said third line L3 extends at an angle β of 108° in relation to said first line L1 and at an angle γ of 36° in relation to said second line L2. In the variant illustrated in Fig 8b, said third line L3 extends at an angle β of 36° in relation to said first line L1 and at an angle γ of 108° in relation to said second line L2.

Figs 9a and 9b schematically illustrate two of several possible variants for the supporting of a cutting insert 30 by the three support surfaces 21-23 in an insert seat of a tool body of a face milling tool according to the invention when each cutting insert 30 has a substantially hexagon shape as seen in a plan view along the centre axis 33 of the cutting insert and in a cross-section perpendicular to the centre axis 33 of the cutting insert, wherein the above-mentioned integer n has the value of 6. In this case, each cutting insert 30 is mountable to the associated insert seat in six different working positions and is provided with six major cutting edges and six abutment surfaces 37. In the variant illustrated in Fig 9a, the first and second support surfaces 21, 22 of the same insert seat are inclined in relation to each other and also inclined in relation to the third support surface 23 of the same insert seat, as seen in any plane that is perpendicular to the reference axis RA of the insert seat and intersects the first, second and third support surfaces 21-23 of the insert seat, wherein said first line L1 extends at an angle φ of 60° in relation to said second line L2, and said third line L3 extends at an angle β of 60° in relation to said first line L1 and at an angle γ of 60° in relation to said second line L2. In the variant illustrated in Fig 9b, the first and second support surfaces 21, 22 of the same insert seat are parallel to each other and inclined in relation to the third support surface 23 of the same insert seat, as seen in any plane that is perpendicular to the reference axis RA of the insert seat and intersects the first, second and third support surfaces 21-23 of the insert seat, wherein said first and second lines L1, L2 are parallel to each other, and said third line L3 extends at an angle β of 60° in relation to said first line L1 and at an angle γ of 120° in relation to said second line L2.

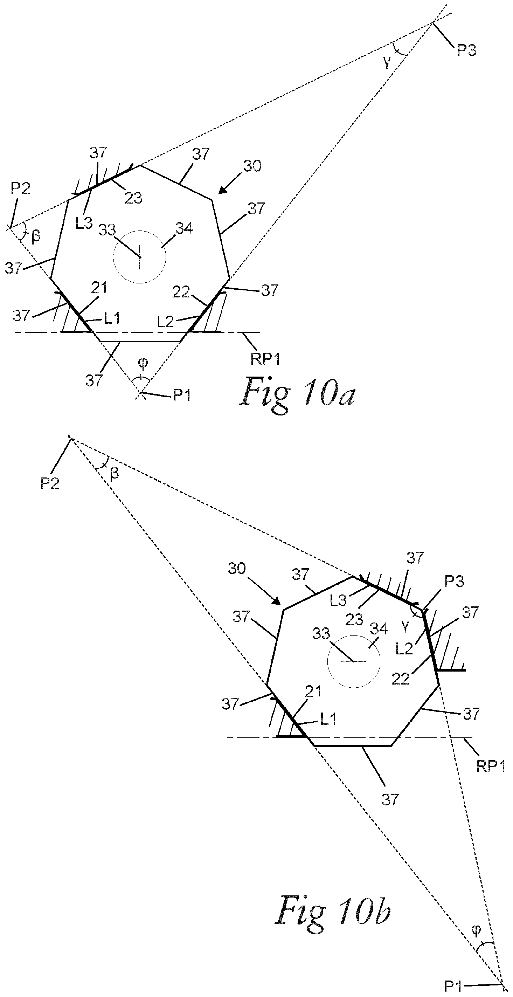

Figs 10a and 10b schematically illustrate two of several possible variants for the supporting of a cutting insert 30 by the three support surfaces 21-23 in an insert seat of a tool body of a face milling tool according to the invention when each cutting insert 30 has a substantially heptagon shape as seen in a plan view along the centre axis 33 of the cutting insert and in a cross-section perpendicular to the centre axis 33 of the cutting insert, wherein the above-mentioned integer n has the value of 7. In this case, each cutting insert 30 is mountable to the associated insert seat in seven different working positions and is provided with seven major cutting edges and seven abutment surfaces 37. In both variants, the first and second support surfaces 21, 22 of the same insert seat are inclined in relation to each other and also inclined in relation to the third support surface 23 of the same insert seat, as seen in any plane that is perpendicular to the reference axis RA of the insert seat and intersects the first, second and third support surfaces 21-23 of the insert seat. In the variant illustrated in Fig 10a, said first line L1 extends at an angle φ of 77,14° in relation to said second line L2, and said third line L3 extends at an angle β of 77,14° in relation to said first line L1 and at an angle γ of 25,71° in relation to said second line L2. In the variant illustrated in Fig 10b, said first line L1 extends at an angle φ of 25,71° in relation to said second line L2, and said third line L3 extends at an angle β of 25,71° in relation to said first line L1 and at an angle γ of 128,57° in relation to said second line L2.

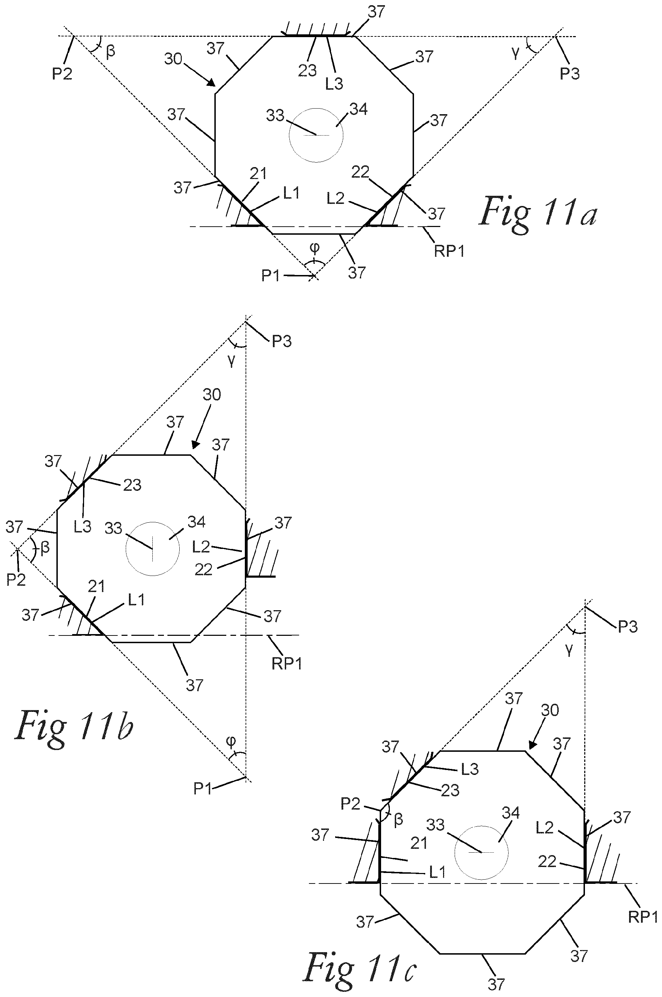

Figs 11a-11c schematically illustrate three of several possible variants for the supporting of a cutting insert 30 by the three support surfaces 21-23 in an insert seat of a tool body of a face milling tool according to the invention when each cutting insert 30 has a substantially octagon shape as seen in a plan view along the centre axis 33 of the cutting insert and in a cross-section perpendicular to the centre axis 33 of the cutting insert, wherein the above-mentioned integer n has the value of 8. In this case, each cutting insert 30 is mountable to the associated insert seat in eight different working positions and is provided with eight major cutting edges and eight abutment surfaces 37. In the variants illustrated in Figs 11a and 11b, the first and second support surfaces 21, 22 of the same insert seat are inclined in relation to each other and also inclined in relation to the third support surface 23 of the same insert seat, as seen in any plane that is perpendicular to the reference axis RA of the insert seat and intersects the first, second and third support surfaces 21-23 of the insert seat. In the variant illustrated in Fig 11a, said first line L1 extends at an angle φ of 90° in relation to said second line L2, and said third line L3 extends at an angle β of 45° in relation to said first line L1 and at an angle γ of 45° in relation to said second line L2. In the variant illustrated in Fig 11b, said first line L1 extends at an angle φ of 45° in relation to said second line L2, and said third line L3 extends at an angle β of 90° in relation to said first line L1 and at an angle γ of 45° in relation to said second line L2. In the variant illustrated in Fig 11c, the first and second support surfaces 21, 22 of the same insert seat are parallel to each other and inclined in relation to the third support surface 23 of the same insert seat, as seen in any plane that is perpendicular to the reference axis RA of the insert seat and intersects the first, second and third support surfaces 21-23 of the insert seat, wherein said first and second lines L1, L2 are parallel to each other, and said third line L3 extends at an angle β of 135° in relation to said first line L1 and at an angle γ of 45° in relation to said second line L2.

In the embodiment illustrated in Figs 12-15, wedge mechanisms 50 are associated with a respective one of the insert seats 10. As to the rest, the face milling cutter 1 according to this embodiment corresponds to the embodiment illustrated in Figs 1-5. The wedge mechanisms 50 are mounted in a respective insert seat 10 in order to form an adjustable support for the second major face 32 of the cutting insert 30 mounted in the insert seat. Each wedge mechanism 50 comprises a wedge member 51 and an actuating member 52 for moving the wedge member 51. The wedge member 51 has a first wedge surface 53a configured to slidably abut against the bottom surface 11 of the associated insert seat 10 and an opposite second wedge surface 53b configured to abut against the second major face 32 of the associated cutting insert 30, wherein the second wedge surface 53b is inclined in relation to the first wedge surface 53a. When the cutting insert 30 has been mounted to the insert seat 10 in any of its working positions, the wedge member 51 is moveable along the bottom surface 11 of the associated insert seat 10 by means of the associated actuating member 52 in order to move the second wedge surface 53b of the wedge member 51 into supporting contact with the second major face 32 of the cutting insert 30 and thereby allow the wedge member 51 to take up the interspace between the second major face 32 of the cutting insert 30 and the bottom surface 11 of the insert seat 10.

In the illustrated embodiment, said actuating member 52 has the form of an adjustment screw and is provided with an external first thread 54a configured for threaded engagement with a screw hole 55 in the associated insert seat 10 and an external second thread 54b configured for threaded engagement with a screw hole 56 in the wedge member 51. Said first and second threads 54a, 54b may be threaded in opposite directions and/or may have mutually different thread pitches. By rotation of the actuating member 52 in a first direction of rotation, the wedge member 51 is made to move in a first direction along the bottom surface 11 of the associated insert seat 10 towards the screw hole 55 in order to move the second wedge surface 53b of the wedge member 51 into contact with the second major face 32 of a cutting insert 30 that has been mounted to the insert seat 10 in any of its working positions. By rotation of the actuating member 52 in an opposite second direction of rotation, the wedge member 51 is made to move in an opposite second direction along the bottom surface 11 of the associated insert seat 10 away from the screw hole 55 in order to provide for free space between the wedge member 51 and the second major face 32 of the cutting insert 30 when a repositioning of the cutting insert in the insert seat 10 is to take place, i.e. when the cutting insert 30 is to be mounted to the insert seat 10 in a new working position. A socket 57 designed for releasable engagement with a torque tool (not shown) is provided at the outer free end of the actuating member 52 in order to allow a torque tool to be connected to the actuating member 52 when it is to be rotated in order to make the wedge member 51 move in a desired direction in the associated insert seat 10. The wedge mechanisms 50 may of course also be designed in any other suitable manner.

The invention is of course not in any way restricted to the embodiments described above. On the contrary, many possibilities to modifications thereof will be apparent to a person with ordinary skill in the art without departing from the invention defined in the appended claims.

## Claims

1. A face milling cutter comprising:
- a tool body (2) having a front end (2a) and an opposite rear end (2b), the rear end (2b) being configured for attachment to a machine, wherein a longitudinal centre axis (4) of the tool body (2) extends between the rear end (2b) and the front end (2a) of the tool body;
- at least two insert seats (10) provided in the tool body (2) and distributed in the circumferential direction of the tool body (2), wherein each one of these at least two insert seats (10) comprises a substantially tangentially facing bottom surface (11), a threaded screw hole (14) provided in the bottom surface (11) and having a centre axis (15), a substantially tangentially facing top opening (12) opposite to the bottom surface (11) and an internal wall (13) provided between the bottom surface (11) and the top opening (12) and partly surrounding a reference axis (RA) that coincides with the centre axis (15) of said screw hole (14), the insert seat (10) being open towards the front end (2a) of the tool body (2) through a gap (16) provided between the bottom surface (11) and the top opening (12) in order to allow a cutting insert (30) mounted in the insert seat to project in the axial direction of the tool body (2) beyond a first reference plane (RP1) that extends perpendicularly to the centre axis (4) of the tool body (2) and contains an axially foremost point or axially foremost surface (2c) of the tool body (2), wherein said internal wall (13) is provided with a substantially flat first support surface (21), a substantially flat second support surface (22) and a substantially flat third support surface (23), the first, second and third support surfaces (21-23) being angularly offset from each other with respect to said reference axis (RA) and being inclined at the same angle (α) in relation to a second reference plane (RP2) that is perpendicular to said reference axis (RA) such that they diverge from each other as seen along said reference axis (RA) in a direction through the associated insert seat (10) away from the bottom surface (11) thereof, and wherein the second support surface (22) is separated from the first support surface (21) of the same insert seat (10) by said gap (16) and located at a longer distance from the centre axis (4) of the tool body (2) than the first and third support surfaces (21, 23) of the same insert seat (10) and the first support surface (21) is located closer to said first reference plane (RP1) than the third support surface (23) of the same insert seat (10);
- at least two cutting inserts (30), each of which being detachably mountable in n different working positions in a respective insert seat (10) of said at least two insert seats, where n is an integer having the value of 2, 4, 5, 6, 7 or 8, wherein each cutting insert (30) of said at least two cutting inserts comprises:
• a first major face (31) and a second major face (32) arranged on opposite sides of the cutting insert (30), the cutting insert (30) having a centre axis (33) that extends between the first and second major faces (31, 32), wherein the first major face (31) is configured to face away from the bottom surface (11) of the associated insert seat (10) and serve as a rake face and the second major face (32) is configured to face this bottom surface (11) when the cutting insert (30) is mounted in the insert seat (10) in any of its n working positions,
• a through hole (34) extending centrally through the cutting insert (30) between the first and second major faces (31, 32),
• a peripheral surface (36) extending around the cutting insert (30) between the first and second major faces (31, 32), wherein the cutting insert (30), when mounted in the associated insert seat (10) in any of its n working positions, is configured to abut against the first, second and third support surfaces (21-23) in the insert seat (10) via substantially flat abutment surfaces (37) provided on the peripheral surface (36) and distributed about the centre axis (33) of the cutting insert, and
• n major cutting edges (38) formed at an intersection between the peripheral surface (36) and the first major face (31), each major cutting edge (38) having two opposite ends (38a, 38b) and adjoining, at each one of these two opposite ends (38a, 38b), to a minor corner cutting edge (39) formed at an intersection between the peripheral surface (36) and the first major face (31), wherein these major cutting edges (38) are configured to serve as surface-wiping cutting edges in a respective one of said n working positions of the cutting insert (30); and
- at least two fastening elements (7) in the form of screws associated with a respective one of said at least two cutting inserts (30) and by means of which said at least two cutting inserts (30) may be releasably fixed to the associated insert seats (10) in any of their n working positions, wherein each one of these at least two fastening elements (7) is configured to extend through the through hole (34) in the associated cutting insert (30) of said at least two cutting inserts and to be in threaded engagement with the screw hole (14) at the bottom surface (11) of the insert seat (10) associated with this cutting insert (30),
**characterized in:**
- **that** the first, second and third support surfaces (21-23) of each insert seat (10) of said at least two insert seats are so arranged in relation to each other in the tool body (2) that in any plane that is perpendicular to said reference axis (RA) of the insert seat (10) and intersects the first, second and third support surfaces (21-23) of the insert seat:
• the first support surface (21) extends along a first line (L1) that is parallel to a second line (L2), along which the second support surface (22) extends in the same plane, or is inclined in relation to this second line (L2) such that the first and second lines (L1, L2) converge towards a first point of intersection (P1) located in front of said first reference plane (RP1) as seen in a reference direction (D1) from the rear end (2b) of the tool body towards the front end (2a) of the tool body in parallel with the centre axis (4) of the tool body, and
• the third support surface (23) extends along a third line (L3) that is inclined in relation to said first and second lines (L1, L2) such that the third and first lines (L3, L1) converge towards a second point of intersection (P2) located behind said first reference plane (RP1) as seen in said reference direction (D1) and such that the third and second lines (L3, L2) converge towards a third point of intersection (P3) located behind said first reference plane (RP1) as seen in said reference direction (D1); and
- **that** said at least two cutting inserts (30) and said at least two insert seats (10) are so adapted to each other that the second major face (32) of each cutting insert (30) of said at least two cutting inserts is located at a distance from the bottom surface (11) of the associated insert seat (10) when the cutting insert (30) is mounted to the insert seat (10) in any of its n working positions.

2. A face milling cutter according to claim 1, **characterized in that** said third line (L3) extends at an angle (β) of 25.7-135° in relation to said first line (L1).

3. A face milling cutter according to claim 1 or 2, **characterized in that** said third line (L3) extends at an angle (γ) of 25.7-135° in relation to said second line (L2).

4. A face milling cutter according to any of claims 1-3, **characterized in that** n has the value of 4, 5, 6, 7 or 8, and that said abutment surfaces (37) on the peripheral surface (36) of each one of said at least two cutting inserts (30) are n in number.

5. A face milling cutter according to claim 4, **characterized in that** the first major face (31) of each one of said at least two cutting inserts (30) has a substantially regular polygon shape as seen in a plan view, with n main sides and with chamfered or rounded corners between the main sides, wherein the major cutting edges (38) of the cutting insert (30) extend along a respective one of said n main sides.

6. A face milling cutter according to any of claims 1-5, **characterized in that** said abutment surfaces (37) on the peripheral surface (36) of each one of said at least two cutting inserts (30) are inclined at an angle of α±0.5° in relation to a third reference plane (RP3) that is perpendicular to the centre axis (33) of the cutting insert (30) such that they diverge from each other as seen along this centre axis (33) in a direction from the second major face (32) of the cutting insert to the first major face (31) thereof, where α is the angle of inclination of the first, second and third support surfaces (21-23) of each one of said at least two insert seats (10) in relation to said second reference plane (RP2).

7. A face milling cutter according to any of claims 1-6, **characterized in that** each one of said at least two cutting inserts (30) has 360°/n rotational symmetry about the centre axis (33) of the cutting insert (30).

8. A face milling cutter according to any of claims 1-7, **characterized in that** each one of said major cutting edges (38) is straight or convex as seen in a plan view along the centre axis (33) of the cutting insert (30).

9. A face milling cutter according to any of claims 1-8, **characterized in that** said at least two cutting inserts (30) and said at least two insert seats (10) are so adapted to each other that the major cutting edge (38) of each cutting insert (30) that serves as surface-wiping cutting edge of the cutting insert (30) when the cutting insert is mounted to the associated insert seat (10) in any of its n working positions extends substantially perpendicularly to the centre axis (4) of the tool body (2).

10. A face milling cutter according to any of claims 1-9, **characterized in that** the perpendicular distance (D) between said first reference plane (RP1) and an axially foremost point of any cutting insert (30) of said at least two cutting inserts (30) is 0.5-1.5 mm when the cutting insert (30) is mounted to the associated insert seat (10) in any of its n working positions.

11. A face milling cutter according to any of claims 1-10, **characterized in that** the face milling cutter (1) comprises at least two wedge mechanisms (50), each of which being mountable in a respective insert seat (10) of said at least two insert seats in order to form an adjustable support for the second major face (32) of the cutting insert (30) mounted therein, wherein each one of these at least two wedge mechanisms (50) comprises:
- a wedge member (51) having a first wedge surface (53a) configured to slidably abut against the bottom surface (11) of the associated insert seat (10) and an opposite second wedge surface (53b) configured to abut against the second major face (32) of the associated cutting insert (30); and
- an actuating member (52), by means of which the wedge member (51) is moveable along the bottom surface (11) of the associated insert seat (10) in order to move the second wedge surface (53b) of the wedge member into supporting contact with the second major face (32) of the associated cutting insert (30) when the cutting insert (30) has been mounted to the insert seat (10) in any of its n working positions.

12. A face milling cutter according to claim 11, **characterized in that** said actuating member (52) has the form of an adjustment screw.

13. A face milling cutter according to claim 12, **characterized in that** said actuating member (52) is provided with an external first thread (54a) configured for threaded engagement with a screw hole (55) in the associated insert seat (10) and an external second thread (54b) configured for threaded engagement with a screw hole (56) in the wedge member (51).

14. A face milling cutter according to claim 13, **characterized in that** said first and second threads (54a, 54b) have different thread pitches.

15. A face milling cutter according to claim 13 or 14, **characterized in that** said first and second threads (54a, 54b) are threaded in opposite directions.

## Patentansprüche

1. Planfräser, umfassend:
- einen Werkzeugkörper (2) mit einem vorderen Ende (2a) und einem gegenüberliegenden hinteren Ende (2b), wobei das hintere Ende (2b) zur Befestigung an einer Maschine ausgebildet ist, wobei sich eine Längsmittelachse (4) des Werkzeugkörpers (2) zwischen dem hinteren Ende (2b) und dem vorderen Ende (2a) des Werkzeugkörpers erstreckt;
- mindestens zwei in dem Werkzeugkörper (2) vorgesehene und in Umfangsrichtung des Werkzeugkörpers (2) verteilte Einsatzsitze (10), wobei jeder dieser mindestens zwei Einsatzsitze (10) eine im Wesentlichen tangential ausgerichtete Bodenfläche (11), ein in der Bodenfläche (11) vorgesehenes Gewindeschraubenloch (14) mit einer Mittelachse (15), eine im Wesentlichen tangential ausgerichtete, der Bodenfläche (11) gegenüberliegende obere Öffnung (12) und eine Innenwand (13) aufweist, die zwischen der Bodenfläche (11) und der oberen Öffnung (12) vorgesehen ist und teilweise eine Referenzachse (RA) umgibt, die mit der Mittelachse (15) des Gewindebohrungslochs (14) übereinstimmt, wobei der Einsatzsitz (10) zum vorderen Ende (2a) des Werkzeugkörpers (2) hin durch einen zwischen der Bodenfläche (11) und der oberen Öffnung (12) vorgesehenen Spalt (16) offen ist, damit ein in dem Einsatzsitz montierter Schneideinsatz (30) in axialer Richtung des Werkzeugkörpers (2) über eine erste Bezugsebene (RP1) hinausragen kann, die sich senkrecht zur Mittelachse (4) des Werkzeugkörpers (2) erstreckt und einen axial vordersten Punkt oder eine axial vorderste Fläche (2c) des Werkzeugkörpers (2) enthält, wobei die Innenwand (13) mit einer im Wesentlichen flachen ersten Auflagefläche (21), einer im Wesentlichen flachen zweiten Auflagefläche (22) und einer im Wesentlichen flachen dritten Auflagefläche (23) versehen ist, wobei die erste, zweite und dritte Auflagefläche (21-23) in Bezug auf die Bezugsachse (RA) winklig zueinander versetzt sind und in Bezug auf eine zweite Bezugsebene (RP2), die senkrecht zur Bezugsachse (RA) steht, um denselben Winkel (α) geneigt sind, so dass sie voneinander abweichen, wenn man entlang der Bezugsachse (RA) in einer Richtung durch den zugehörigen Einsatzsitz (10) von dessen Bodenfläche (11) weg blickt, und wobei die zweite Auflagefläche (22) von der ersten Auflagefläche (21) desselben Einsatzsitzes (10) durch den Spalt (16) getrennt ist und sich in einem größeren Abstand von der Mittelachse (4) des Werkzeugkörpers (2) befindet als die erste und dritte Auflagefläche (21, 23) desselben Einsatzsitzes (10) und die erste Auflagefläche (21) näher an der ersten Bezugsebene (RP1) angeordnet ist als die dritte Auflagefläche (23) desselben Einsatzsitzes (10);
- mindestens zwei Schneideinsätze (30), von denen jeder in n verschiedenen Arbeitspositionen in einem jeweiligen Einsatzsitz (10) der mindestens zwei Einsatzsitze abnehmbar montierbar ist, wobei n eine ganze Zahl mit dem Wert 2, 4, 5, 6, 7 oder 8 ist, wobei jeder Schneideinsatz (30) der mindestens zwei Schneideinsätze folgendes umfasst:
• eine erste Hauptfläche (31) und eine zweite Hauptfläche (32), die auf gegenüberliegenden Seiten des Schneideinsatzes (30) angeordnet sind, wobei der Schneideinsatz (30) eine Mittelachse (33) aufweist, die sich zwischen der ersten und der zweiten Hauptfläche erstreckt (31, 32) erstreckt, wobei die erste Hauptfläche (31) so konfiguriert ist, dass sie von der Bodenfläche (11) des zugehörigen Einsatzsitzes (10) weg zeigt und als Spanfläche dient, und die zweite Hauptfläche (32) so konfiguriert ist, dass sie dieser Bodenfläche (11) zugewandt ist, wenn der Schneideinsatz (30) in einer seiner n Arbeitspositionen in den Einsatzsitz (10) eingesetzt ist,
• ein Durchbruch (34), der sich mittig durch den Schneideinsatz (30) zwischen der ersten und der zweiten Hauptfläche (31, 32) erstreckt,
• eine Umfangsfläche (36), die sich zwischen der ersten und der zweiten Hauptfläche (31, 32) um den Schneideinsatz (30) herum erstreckt, wobei der Schneideinsatz (30), wenn er in dem zugehörigen Einsatzsitz (10) in einer seiner n Arbeitspositionen montiert ist, so konfiguriert ist, dass er über im Wesentlichen flache Anlageflächen (37), die an der Umfangsfläche (36) vorgesehen und um die Mittelachse (33) des Schneideinsatzes verteilt sind, an der ersten, zweiten und dritten Auflagefläche (21-23) im Einsatzsitz (10) anliegt, und
• n Hauptschneidkanten (38), die an einem Schnittpunkt zwischen der Umfangsfläche (36) und der ersten Hauptfläche (31) ausgebildet sind, wobei jede Hauptschneide (38) zwei gegenüberliegende Enden (38a, 38b) aufweist und sich an jedem dieser beiden gegenüberliegenden Enden anschließt (38a, 38b) an eine Nebeneckenschneidkante (39) angrenzt, die an einem Schnittpunkt zwischen der Umfangsfläche (36) und der ersten Hauptfläche (31) ausgebildet ist, wobei diese Hauptschneidkanten (38) so konfiguriert sind, dass sie in einer jeweiligen der n Arbeitspositionen des Schneideinsatzes (30) als oberflächenwischende Schneidkanten dienen; und
- mindestens zwei Befestigungselemente (7) in Form von Schrauben, die jeweils einem der mindestens zwei Schneideinsätze (30) zugeordnet sind und mit denen die mindestens zwei Schneideinsätze (30) lösbar an den zugehörigen Einsatzsitzen (10) in jeder ihrer n Arbeitspositionen befestigt werden können, wobei jedes dieser mindestens zwei Befestigungselemente (7) so konfiguriert ist, dass es sich durch den Durchbruch (34) in dem zugehörigen Schneideinsatz (30) der mindestens zwei Schneideinsätze erstreckt und mit dem Schraubenloch (14) an der Bodenfläche (11) des diesem Schneideinsatz (30) zugeordneten Einsatzsitzes (10) in Gewindeeingriff steht,
**dadurch gekennzeichnet,**
- **dass** die erste, zweite und dritte Auflagefläche (21-23) jedes Einsatzsitzes (10) der mindestens zwei Einsatzsitze in Bezug zueinander im Werkzeugkörper (2) so angeordnet sind, dass in jeder Ebene, die senkrecht zur Bezugsachse (RA) des Einsatzsitzes (10) steht und die erste, zweite und dritte Auflagefläche (21-23) des Einsatzsitzes schneidet:
• sich die erste Auflagefläche (21) entlang einer ersten Linie (L1) erstreckt, die parallel zu einer zweiten Linie (L2) verläuft, entlang der sich die zweite Auflagefläche (22) in derselben Ebene erstreckt, oder in Bezug auf diese zweite Linie (L2) so geneigt ist, dass die erste und die zweite Linie (L1, L2) zu einem ersten Schnittpunkt (P1) konvergieren, der sich vor der ersten Referenzebene (RP1) befindet, wenn man in einer Referenzrichtung (D1) vom hinteren Ende (2b) des Werkzeugkörpers zum vorderen Ende (2a) des Werkzeugkörpers parallel zur Mittelachse (4) des Werkzeugkörpers blickt, und
• sich die dritte Auflagefläche (23) entlang einer dritten Linie (L3) erstreckt, die in Bezug auf die erste und zweite Linie (L1, L2) geneigt ist, sodass die dritte und erste Linie (L3, L1) in Richtung eines zweiten Schnittpunkts (P2) konvergieren, der sich hinter der ersten Referenzebene (RP1) befindet, wenn man in der Referenzrichtung (D1) blickt, und sodass die dritte und zweite Linie (L3, L2) in Richtung eines dritten Schnittpunktes (P3) koonvergieren, der sich hinter der ersten Referenzebene (RP1) befindet, wenn man in der Referenzrichtung (D1) blickt; und
- **dass** die mindestens zwei Schneideinsätze (30) und die mindestens zwei Einsatzsitze (10) so aufeinander abgestimmt sind, dass die zweite Hauptfläche (32) jedes Schneideinsatzes (30) der mindestens zwei Schneideinsätze in einem Abstand von der Bodenfläche (11) des zugehörigen Einsatzsitzes (10) angeordnet ist, wenn der Schneideinsatz (30) in einer seiner n Arbeitspositionen auf dem Einsatzsitz (10) montiert ist.

2. Planfräser nach Anspruch 1, **dadurch gekennzeichnet, dass** sich die dritte Linie (L3) in einem Winkel (β) von 25,7-135° in Bezug auf die erste Linie (L1) erstreckt.

3. Planfräser nach Anspruch 1 oder 2, **dadurch gekennzeichnet, dass** sich die dritte Linie (L3) in einem Winkel (γ) von 25,7 bis 135° in Bezug auf die zweite Linie (L2) erstreckt.

4. Planfräser nach einem der Ansprüche 1 bis 3, **dadurch gekennzeichnet, dass** n den Wert 4, 5, 6, 7 oder 8 hat und dass die Anlageflächen (37) an der Umfangsfläche (36) jedes der mindestens zwei Schneideinsätze (30) in der Anzahl n vorhanden sind.

5. Planfräser nach Anspruch 4, **dadurch gekennzeichnet, dass** die erste Hauptfläche (31) jedes der mindestens zwei Schneideinsätze (30) in der Draufsicht eine im Wesentlichen regelmäßige polygonale Form mit n Hauptseiten und abgeschrägten oder abgerundeten Ecken zwischen den Hauptseiten aufweist, wobei sich die Hauptschneidkanten (38) des Schneideinsatzes (30) entlang einer jeweiligen der n Hauptseiten erstrecken.

6. Planfräser nach einem der Ansprüche 1-5, **dadurch gekennzeichnet, dass** die Anlageflächen (37) an der Umfangsfläche (36) jedes der mindestens zwei Schneideinsätze (30) in einem Winkel von α±0,5° in Bezug auf eine dritte Bezugsebene (RP3) geneigt sind, die senkrecht zur Mittelachse (33) des Schneideinsatzes (30) steht, so dass sie entlang dieser Mittelachse (33) in einer Richtung von der zweiten Hauptfläche (32) des Schneideinsatzes zu dessen erster Hauptfläche (31) voneinander abweichen, wobei α der Neigungswinkel der ersten, zweiten und dritten Auflagefläche (21-23) jedes der mindestens zwei Einsatzsitze (10) in Bezug auf die zweite Bezugsebene (RP2) ist.

7. Planfräser nach einem der Ansprüche 1-6, **dadurch gekennzeichnet, dass** jeder der mindestens zwei Schneideinsätze (30) eine 360°/n-Rotationssymmetrie um die Mittelachse (33) des Schneideinsatzes (30) aufweist.

8. Planfräser nach einem der Ansprüche 1-7, **dadurch gekennzeichnet, dass** jede der Hauptschneidkanten (38) in einer Draufsicht entlang der Mittelachse (33) des Schneideinsatzes (30) gerade oder konvex ist.

9. Planfräser nach einem der Ansprüche 1-8, **dadurch gekennzeichnet, dass** die mindestens zwei Schneideinsätze (30) und die mindestens zwei Einsatzsitze (10) so aufeinander abgestimmt sind, dass die Hauptschneidkante (38) jedes Schneideinsatzes (30), die als oberflächenabstreifende Schneidkante des Schneideinsatzes (30) dient, wenn der Schneideinsatz in einer seiner n Arbeitspositionen in den zugehörigen Einsatzsitz (10) eingesetzt ist, im Wesentlichen senkrecht zur Mittelachse (4) des Werkzeugkörpers (2) verläuft.

10. Planfräser nach einem der Ansprüche 1-9, **dadurch gekennzeichnet, dass** der senkrechte Abstand (D) zwischen der ersten Bezugsebene (RP1) und einem axial vordersten Punkt eines beliebigen Schneideinsatzes (30) der mindestens zwei Schneideinsätze (30) 0,5 bis 1,5 mm beträgt, wenn der Schneideinsatz (30) in einer seiner n Arbeitspositionen auf dem zugehörigen Einsatzsitz (10) montiert ist.

11. Planfräser nach einem der Ansprüche 1-10, **dadurch gekennzeichnet, dass** der Planfräser (1) mindestens zwei Keilmechanismen (50) umfasst, von denen jeder in einem entsprechenden Einsatzsitz (10) der mindestens zwei Einsatzsitze montiert werden kann, um eine einstellbare Stütze für die zweite Hauptfläche (32) des darin montierten Schneideinsatzes (30) zu bilden, wobei jeder dieser mindestens zwei Keilmechanismen (50) umfasst:
- ein Keilelement (51) mit einer ersten Keilfläche (53a), die so konfiguriert ist, dass sie gleitend an der Bodenfläche (11) des zugehörigen Einsatzsitzes (10) anliegt, und einer gegenüberliegenden zweiten Keilfläche (53b), die so konfiguriert ist, dass sie an der zweiten Hauptfläche (32) des zugehörigen Schneideinsatzes (30) anliegt; und
- ein Betätigungselement (52), mittels dessen das Keilelement (51) entlang der Bodenfläche (11) des zugehörigen Einsatzsitzes (10) bewegbar ist, um die zweite Keilfläche (53b) des Keilelements in Stützberührung mit der zweiten Hauptfläche (32) des zugehörigen Schneideinsatzes (30) zu bringen, wenn der Schneideinsatz (30) in einer seiner n Arbeitspositionen auf dem Einsatzsitz (10) montiert wurde.

12. Planfräser nach Anspruch 11, **dadurch gekennzeichnet, dass** das Betätigungselement (52) die Form einer Einstellschraube hat.

13. Planfräser nach Anspruch 12, **dadurch gekennzeichnet, dass** das Betätigungselement (52) mit einem ersten Außengewinde (54a) versehen ist, das zum Gewindeeingriff mit einem Schraubenloch (55) im zugehörigen Einsatzsitz (10) ausgebildet ist, und mit einem zweiten Außengewinde (54b), das zum Gewindeeingriff mit einem Schraubenloch (56) im Keilelement (51) vorgesehen ist.

14. Planfräser nach Anspruch 13, **dadurch gekennzeichnet, dass** das erste und das zweite Gewinde (54a, 54b) unterschiedliche Gewindesteigungen aufweisen.

15. Planfräser nach Anspruch 13 oder 14, **dadurch gekennzeichnet, dass** das erste und das zweite Gewinde (54a, 54b) in entgegengesetzte Richtungen gewunden sind.

## Revendications

1. Fraise à surfacer comprenant :
- un corps d'outil (2) présentant une extrémité avant (2a) et une extrémité arrière opposée (2b), l'extrémité arrière (2b) étant configurée pour être attachée à une machine, où un axe central longitudinal (4) du corps d'outil (2) s'étend entre l'extrémité arrière (2b) et l'extrémité avant (2a) du corps d'outil ;
- au moins deux sièges de plaquette (10) prévus dans le corps d'outil (2) et répartis dans la direction circonférentielle du corps d'outil (2), où chacun de ces au moins deux sièges de plaquette (10) comprend une surface inférieure orientée sensiblement tangentiellement (11), un trou taraudé (14) prévu dans la surface inférieure (11) et présentant un axe central (15), une ouverture supérieure orientée sensiblement tangentiellement (12) opposée à la surface inférieure (11) et une paroi interne (13) prévue entre la surface inférieure (11) et l'ouverture supérieure (12) et entourant partiellement un axe de référence (RA) qui coïncide avec l'axe central (15) dudit trou taraudé (14), le siège de plaquette (10) étant ouvert en direction de l'extrémité avant (2a) du corps d'outil (2) via un espace (16) prévu entre la surface inférieure (11) et l'ouverture supérieure (12) de sorte à permettre à une plaquette de coupe (30) d'être montée dans le siège de plaquette de manière à dépasser dans la direction axiale du corps d'outil (2) au-delà d'un premier plan de référence (RP1) qui s'étend perpendiculairement à l'axe central (4) du corps d'outil (2) et contient un point axialement le plus à l'avant ou une surface axialement la plus à l'avant (2c) du corps d'outil (2), où ladite paroi interne (13) est dotée d'une première surface de support sensiblement plane (21), d'une deuxième surface de support sensiblement plane (22) et d'une troisième surface de support sensiblement plane (23), les première, deuxième et troisième surfaces de support (21 à 23) étant angulairement décalées les unes des autres par rapport audit axe de référence (RA) et étant inclinées selon le même angle (α) par rapport à un deuxième plan de référence (RP2) qui est perpendiculaire audit axe de référence (RA) de telle sorte qu'elles divergent les unes des autres selon une vue d'observation le long dudit axe de référence (RA) dans une direction à travers le siège de plaquette associé (10) en s'écartant de la surface inférieure (11) de celui-ci, et où la deuxième surface de support (22) est séparée de la première surface de support (21) du même siège de plaquette (10) par ledit espace (16) et située à une plus grande distance de l'axe central (4) du corps d'outil (2) que les première et troisième surfaces de support (21, 23) du même siège de plaquette (10) et la première surface de support (21) est située plus près dudit premier plan de référence (RP1) que la troisième surface de support (23) du même siège de plaquette (10) ;
- au moins deux plaquettes de coupe (30), chacune d'elles pouvant être montée de manière amovible dans n positions de travail différentes dans un siège de plaquette respectif (10) parmi lesdits au moins deux sièges de plaquette, où n est un entier ayant la valeur de 2, 4, 5, 6, 7 ou 8, où chaque plaquette de coupe (30) parmi lesdites au moins deux plaquettes de coupe comprend :
• une première face principale (31) et une seconde face principale (32) agencées sur des côtés opposés de la plaquette de coupe (30), la plaquette de coupe (30) présentant un axe central (33) qui s'étend entre les première et seconde faces principales (31, 32), où la première face principale (31) est configurée pour être orientée vers l'opposé de la surface inférieure (11) du siège de plaquette associé (10) et sert de face d'attaque et la seconde face principale (32) est configurée pour faire face à cette surface inférieure (11) lorsque la plaquette de coupe (30) est montée dans le siège de plaquette (10) dans l'une de ses n positions de travail,
• un trou traversant (34) s'étendant centralement à travers la plaquette de coupe (30) entre les première et seconde faces principales (31, 32),
• une surface périphérique (36) s'étendant autour de la plaquette de coupe (30) entre les première et seconde faces principales (31, 32), où la plaquette de coupe (30), lorsqu'elle est montée dans le siège de plaquette associé (10) dans l'une de ses n positions de travail, est configurée pour buter contre les première, deuxième et troisième surfaces de support (21 à 23) dans le siège de plaquette (10) via des surfaces de butée sensiblement planes (37) prévues sur la surface périphérique (36) et réparties autour de l'axe central (33) de la plaquette de coupe, et
• n arêtes de coupe principales (38) formées à une intersection entre la surface périphérique (36) et la première face principale (31), chaque arête de coupe principale (38) ayant deux extrémités opposées (38a, 38b) et rejoignant, à chacune de ces deux extrémités opposées (38a, 38b), une arête de coupe de coin secondaire (39) formée à une intersection entre la surface périphérique (36) et la première face principale (31), où ces arêtes de coupe principales (38) sont configurées pour servir d'arête de coupe de raclage de surface dans une position respective parmi lesdites n positions de travail de la plaquette de coupe (30) ; et
- au moins deux éléments de fixation (7) sous la forme de vis associés à une plaquette respective parmi lesdites au moins deux plaquettes de coupe (30) et au moyen desquels lesdites au moins deux plaquettes de coupe (30) peuvent être fixées de manière amovible sur les sièges de plaquette associés (10) dans l'une de leurs n positions de travail, où chacun de ces au moins deux éléments de fixation (7) est configuré pour s'étendre à travers le trou traversant (34) dans la plaquette de coupe associée (30) parmi lesdites au moins deux plaquettes de coupe et pour être en engagement vissé avec le trou taraudé (14) au niveau de la surface inférieure (11) du siège de plaquette (10) associé à cette plaquette de coupe (30),
**caractérisée en ce :**
- **que** les première, deuxième et troisième surfaces de support (21 à 23) de chaque siège de plaquette (10) parmi lesdits au moins deux sièges de plaquette sont agencées les unes par rapport aux autres dans le corps d'outil (2) de sorte que dans tout plan qui est perpendiculaire audit axe de référence (RA) du siège de plaquette (10) et coupe les première, deuxième et troisième surfaces de support (21 à 23) du siège de plaquette :
• la première surface de support (21) s'étend le long d'une première droite (L1) qui est parallèle à une deuxième droite (L2), le long de laquelle la deuxième surface de support (22) s'étend dans le même plan, ou est inclinée par rapport à cette deuxième droite (L2) de telle sorte que les première et deuxième droites (L1, L2) convergent vers un premier point d'intersection (P1) situé devant ledit premier plan de référence (RP1) selon une vue d'observation dans une direction de référence (D1) allant de l'extrémité arrière (2b) du corps d'outil vers l'extrémité avant (2a) du corps d'outil parallèlement à l'axe central (4) du corps d'outil, et
• la troisième surface de support (23) s'étend le long d'une troisième droite (L3) qui est inclinée par rapport auxdites première et deuxième droites (L1, L2) de telle sorte les troisième et première droites (L3, L1) convergent vers un deuxième point d'intersection (P2) situé derrière ledit premier plan de référence (RP1) selon une vue d'observation dans ladite direction de référence (D1) et de telle sorte que les troisième et deuxième droites (L3, L2) convergent vers un troisième point d'intersection (P3) situé derrière ledit premier plan de référence (RP1) selon une vue d'observation dans ladite direction de référence (D1) ; et
- **que** lesdites au moins deux plaquettes de coupe (30) et lesdits au moins deux sièges de plaquette (10) sont réciproquement conçus de sorte que la seconde face principale (32) de chaque plaquette de coupe (30) parmi lesdites au moins deux plaquettes de coupe est située à une certaine distance de la surface inférieure (11) du siège de plaquette associé (10) lorsque la plaquette de coupe (30) est montée sur le siège de plaquette (10) dans l'une de ses n positions de travail.

2. Fraise à surfacer selon la revendication 1, **caractérisée en ce que** ladite troisième droite (L3) s'étend selon un angle (β) de 25,7 à 135° par rapport à ladite première droite (L1).

3. Fraise à surfacer selon la revendication 1 ou 2, **caractérisée en ce que** ladite troisième droite (L3) s'étend selon un angle (γ) de 25,7 à 135° par rapport à ladite deuxième droite (L2).

4. Fraise à surfacer selon l'une quelconque des revendications 1 à 3, **caractérisée en ce que** n a la valeur de 4, 5, 6, 7 ou 8, et que lesdites surfaces de butée (37) sur la surface périphérique (36) de chacune desdites au moins deux plaquettes de coupe (30) sont au nombre de n.

5. Fraise à surfacer selon la revendication 4, **caractérisée en ce que** la première face principale (31) de chacune desdites au moins deux plaquettes de coupe (30) présente une forme de polygone sensiblement régulier selon une vue de dessus, avec n côtés principaux et avec des coins chanfreinés ou arrondis entre les côtés principaux, où les arêtes de coupe principales (38) de la plaquette de coupe (30) s'étendent le long d'un côté respectif parmi lesdits n côtés principaux.

6. Fraise à surfacer selon l'une quelconque des revendications 1 à 5, **caractérisée en ce que** lesdites surfaces de butée (37) sur la surface périphérique (36) de chacune desdites au moins deux plaquettes de coupe (30) sont inclinées selon un angle de α ± 0,5° par rapport à un troisième plan de référence (RP3) qui est perpendiculaire à l'axe central (33) de la plaquette de coupe (30) de telle sorte qu'elles divergent les unes des autres selon une vue d'observation le long de cet axe central (33) dans une direction allant de la seconde face principale (32) de la plaquette de coupe vers la première face principale (31) de celle-ci, où α est l'angle d'inclinaison des première, deuxième et troisième surfaces de support (21 à 23) de chacun desdits au moins deux sièges de plaquette (10) par rapport audit deuxième plan de référence (RP2).

7. Fraise à surfacer selon l'une quelconque des revendications 1 à 6, **caractérisée en ce que** chacune desdites au moins deux plaquettes de coupe (30) présente une symétrie en rotation de 360°/n autour de l'axe central (33) de la plaquette de coupe (30).

8. Fraise à surfacer selon l'une quelconque des revendications 1 à 7, **caractérisée en ce que** chacune desdites arêtes de coupe principales (38) est rectiligne ou convexe selon une vue de dessus le long de l'axe central (33) de la plaquette de coupe (30).

9. Fraise à surfacer selon l'une quelconque des revendications 1 à 8, **caractérisée en ce que** lesdites au moins deux plaquettes de coupe (30) et lesdits au moins deux sièges de plaquette (10) sont réciproquement conçus de sorte que l'arête de coupe principale (38) de chaque plaquette de coupe (30) qui sert d'arête de coupe de raclage de surface de la plaquette de coupe (30) lorsque la plaquette de coupe est montée sur le siège de plaquette associé (10) dans l'une de ses n positions de travail s'étend sensiblement perpendiculairement à l'axe central (4) du corps d'outil (2).

10. Fraise à surfacer selon l'une quelconque des revendications 1 à 9, **caractérisée en ce que** la distance perpendiculaire (D) entre ledit premier plan de référence (RP1) et un point axialement le plus à l'avant de toute plaquette de coupe (30) parmi lesdites au moins deux plaquettes de coupe (30) va de 0,5 à 1,5 mm lorsque la plaquette de coupe (30) est montée sur le siège de plaquette associé (10) dans l'une de ses n positions de travail.

11. Fraise à surfacer selon l'une quelconque des revendications 1 à 10, **caractérisée en ce que** la fraise à surfacer (1) comprend au moins deux mécanismes de cale (50), chacun d'eux pouvant être monté dans un siège de plaquette respectif (10) parmi lesdits au moins deux sièges de plaquette afin de former un support réglable pour la seconde face principale (32) de la plaquette de coupe (30) montée en son sein, où chacun de ces au moins deux mécanismes de cale (50) comprend :
- un élément de cale (51) présentant une première surface de cale (53a) configurée pour buter avec possibilité de coulissement contre la surface inférieure (11) du siège de plaquette associé (10) et une seconde surface de cale opposée (53b) configurée pour buter contre la seconde face principale (32) de la plaquette de coupe associée (30) ; et
- un élément d'actionnement (52), au moyen duquel l'élément de cale (51) peut être déplacé le long de la surface inférieure (11) du siège de plaquette associé (10) de sorte à déplacer la seconde surface de cale (53b) de l'élément de cale dans un contact de support avec la seconde face principale (32) de la plaquette de coupe associée (30) lorsque la plaquette de coupe (30) a été montée sur le siège de plaquette (10) dans l'une de ses n positions de travail.

12. Fraise à surfacer selon la revendication 11, **caractérisée en ce que** ledit élément d'actionnement (52) a la forme d'une vis de réglage.

13. Fraise à surfacer selon la revendication 12, **caractérisée en ce que** ledit élément d'actionnement (52) est doté d'un premier filetage externe (54a) configuré pour un engagement vissé avec un trou taraudé (55) dans le siège de plaquette associé (10) et un second filetage externe (54b) configuré pour un engagement vissé avec un trou taraudé (56) dans l'élément de cale (51).

14. Fraise à surfacer selon la revendication 13, **caractérisée en ce que** lesdits premier et second filetages (54a, 54b) ont des pas de filetage différents.

15. Fraise à surfacer selon la revendication 13 ou 14, **caractérisée en ce que** lesdits premier et second filetages (54a, 54b) sont filetés dans des directions opposées.
